# EUROPEAN PATENT APPLICATION

(11) **EP 2 621 139 A1**
(43) Date of publication of application: **31.07.2013**
(21) Application number: 11789191.1
(22) Date of filing: 31.05.2011
(51) Int. Cl.: H04L 29/06

(54) **METHOD AND DEVICE FOR STORING CONTENT IN SERVICE OVERLAY NETWORK**

(30) Priority: 26.09.2010 CN 201010506261
(71) Applicant: Huawei Technologies Co., Ltd., Shenzhen, Guangdong 518129 (CN)
(72) Inventor: CHANG, Heng, Shenzhen Guangdong 518129 (CN); KOTEESWARA, Prabhu A, Bangalore 560008 (IN); NIRANTH, Amogh, Bangalore 560008 (IN)
(74) Representative: Epping - Hermann - Fischer
(86) International application number: PCT/CN2011/074937
(87) International publication number: WO 2011/150812

(57) **Abstract**

The present invention provides a method and a device for storing content in a service overlay network, relating to the field of communications. The method includes: determining, by a content transfer device, whether a content, whose QoS performance does not meet a QoS requirement, is able to be buffered; if the content is able to be buffered, establishing, by the content transfer device, a first content transmission connection with a service provider corresponding to the content, and buffering the content that is transmitted by the service provider through the first content transmission connection; and if the content is not able to be buffered, establishing, by the content transfer device, a first content transmission connection with a service provider corresponding to the content, establishing a second content transmission connection with a network storage device, and transferring, through the second content transmission connection, the content that is transmitted by the service provider through the first content transmission connection, to the network storage device for storage. According to the present invention, content, whose QoS performance does not meet a QoS requirement, is buffered on a content transfer device or stored on a network storage device, so that the content can be acquired from a non-service provider, thereby improving QoS performance of content transmission in a service overlay network.

## Description

This application claims priority to Chinese Patent Application No. 201010506261.2, filed with the Chinese Patent Office on September 26, 2010 and entitled "METHOD AND DEVICE FOR STORING CONTENT IN SERVICE OVERLAY NETWORK", which is incorporated herein by reference in its entirety.

### FIELD OF THE INVENTION

The present invention relates to the communications field, and in particular to a method and a device for storing content in a service overlay network.

### BACKGROUND OF THE INVENTION

With the rapid development of mobile communications technologies, future telecommunication services are definitely diversified with various features and complexities. Regulating an interaction mechanism between services and combining basic simple services into new services to accelerate development of new services become the aims of a service overlay network. A content transfer device is a functional entity in the service overlay network and a basis for implementing content transmission between services. Its basic function is transmitting data content from a content source to a content request end.

In a conventional service overlay network, content is stored by a service provider. When a service requester initiates a service request, a content transmission channel based on the content transfer device is established between the service requester and the service provider. This enables the service provider to send the content to the service requester through the content transmission channel.

When developing the present invention, the inventor finds at least the following defects in the prior art:

In the conventional service overlay network, content is always stored by a service provider, and then the content is transmitted to a service requester through a content transmission channel based on a content transfer device. However, the content processing and data transmission capabilities of the service provider are generally limited. If content transfer requests increase, QoS (Quality of Service, Quality of Service) performance of content transmission deteriorates, thereby affecting normal service interaction.

### SUMMARY OF THE INVENTION

To improve Quality of Service performance of content transmission, embodiments of the present invention provide a method and a device for storing content in a service overlay network. The technical solutions are as follows:

In one aspect, a method for storing content in a service overlay network is provided, including:
determining, by a content transfer device, whether a content, whose Quality of Service QoS performance does not meet a QoS requirement, is able to be buffered;
if the content is able to be buffered, establishing, by the content transfer device, a first content transmission connection with a service provider corresponding to the content, and buffering the content that is transmitted by the service provider through the first content transmission connection; and
if the content is not able to be buffered, establishing, by the content transfer device, a first content transmission connection with a service provider corresponding to the content, establishing a second content transmission connection with a network storage device, and transferring, through the second content transmission connection, the content that is transmitted by the service provider through the first content transmission connection, to the network storage device for storage.

A content transfer device is further provided, where the device includes:
a first determining module, configured to determine whether a content, whose Quality of Service QoS performance does not meet a QoS requirement, is able to be buffered;
a first establishing module, configured to: when the first determining module determines that the content, whose QoS performance does not meet the QoS requirement, is able to be buffered, establish a first content transmission connection with a service provider corresponding to the content;
a buffering module, configured to buffer the content that is transmitted by the service provider through the first content transmission connection established by the first establishing module;
a second establishing module, configured to: when the first determining module determines that the content, whose QoS performance does not meet the QoS requirement, is not able to be buffered, establish a first content transmission connection with a service provider corresponding to the content, and establish a second content transmission connection with a network storage device; and
a first transferring module, configured to transfer, through the second content transmission connection established by the second establishing module, the content that is transmitted by the service provider through the first content transmission connection, to the network storage device for storage.

According to the embodiments of the present invention, content, whose QoS performance does not meet a QoS requirement, is buffered on a content transfer device, or transferred by the content transfer device to a network storage device, so that the network storage device stores the content. In this way, the content can be obtained from a non-service provider during transfer, thereby improving QoS performance of content transmission in a service overlay network.

### BRIEF DESCRIPTION OF THE DRAWINGS

To illustrate the technical solutions in the embodiments of the present invention, the following briefly describes the accompanying drawings required for describing the embodiments. Apparently, the accompanying drawings in the following description illustrate merely show some embodiments of the present invention, and persons of ordinary skill in the art can derive other accompanying drawings from these accompanying drawings without creative efforts.

FIG. 1 is a flow chart of a method for storing content in a service overlay network according to a first embodiment of the present invention;

FIG. 2 is a schematic structural diagram of a system for transferring content in a service overlay network according to a second embodiment of the present invention;

FIG. 3 is a flow chart of a method for storing content in a service overlay network according to a second embodiment of the present invention;

FIG. 4 is a flow chart of a method for transferring content in a service overlay network according to a second embodiment of the present invention;

FIG. 5 is a flow chart of a method for storing content in a service overlay network according to a third embodiment of the present invention;

FIG. 6 is a flow chart of a method for transferring content in a service overlay network according to a third embodiment of the present invention;

FIG. 7 is a first schematic structural diagram of a content transfer device according to a fourth embodiment of the present invention;

FIG. 8 is a second schematic structural diagram of a content transfer device according to a fourth embodiment of the present invention;

FIG. 9 is a third schematic structural diagram of a content transfer device according to a fourth embodiment of the present invention;

FIG. 10 is a fourth schematic structural diagram of a content transfer device according to a fourth embodiment of the present invention;

FIG. 11 is a fifth schematic structural diagram of a content transfer device according to a fourth embodiment of the present invention;

FIG. 12 is a sixth schematic structural diagram of a content transfer device according to a fourth embodiment of the present invention;

FIG. 13 is a schematic structural diagram of a network storage device according to a fifth embodiment of the present invention; and

FIG. 14 is a schematic structural diagram of a system for storing content in a service overlay network according to a sixth embodiment of the present invention.

### DETAILED DESCRIPTION OF THE EMBODIMENTS

To make the objectives, technical solutions, and advantages of the present invention more comprehensible, the following describes the embodiments of the present invention in further detail below with reference to the accompanying drawings.

### Embodiment 1

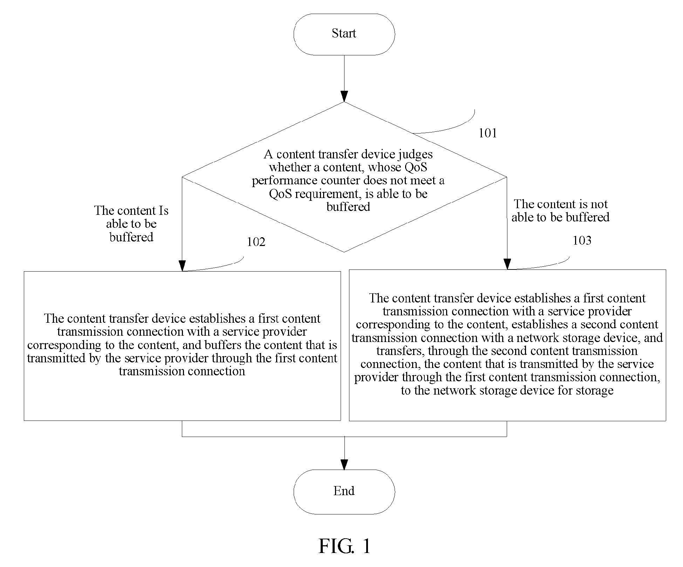

Referring to FIG. 1, this embodiment provides a method for storing content in a service overlay network. The process of the method is specifically as follows:

101: A content transfer device determines whether a content, whose Quality of Service QoS performance does not meet a QoS requirement, is able to be buffered. If the content is able to be buffered, perform step 102. If the content is not able to be buffered, perform step 103.

102: The content transfer device establishes a first content transmission connection with a service provider corresponding to the content, and buffers the content that is transmitted by the service provider through the first content transmission connection. The process ends.

103: The content transfer device establishes a first content transmission connection with a service provider corresponding to the content, establishes a second content transmission connection with a network storage device, and transfers, through the second content transmission connection, the content that is transmitted by the service provider through the first content transmission connection, to the network storage device for storage. The process ends.

According to the method provided in this embodiment, content, whose QoS performance does not meet a QoS requirement, is buffered on a content transfer device, or transferred by the content transfer device to a network storage device, so that the network storage device stores the content. In this way, the content can be obtained from a non-service provider during transfer, thereby improving QoS performance of content transmission in a service overlay network.

### Embodiment 2

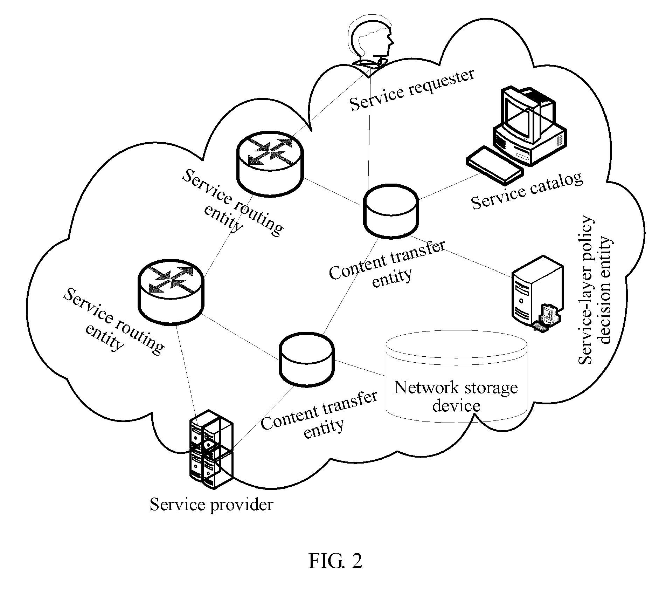

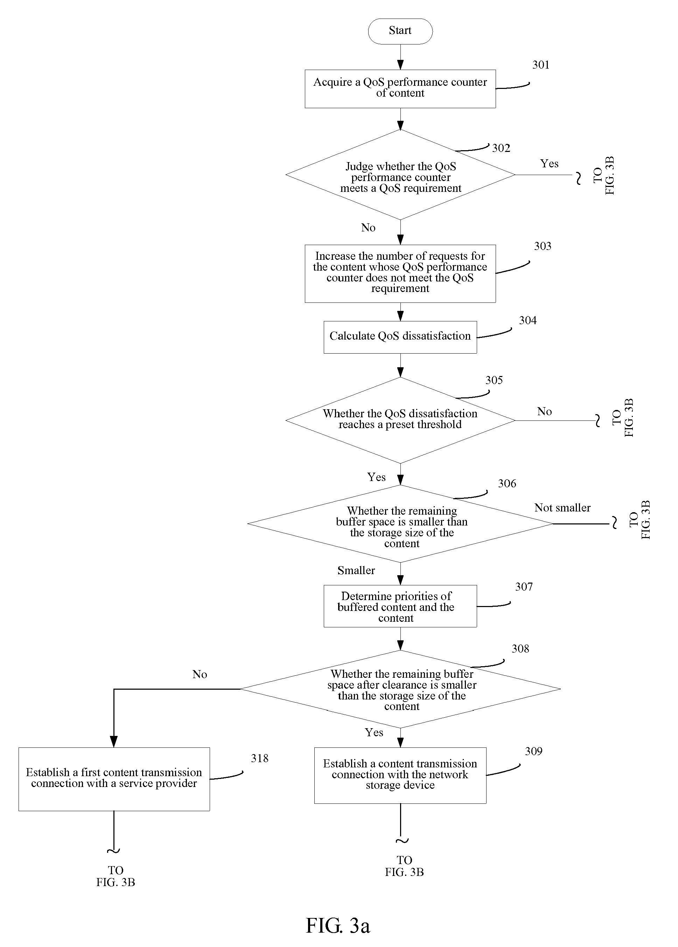

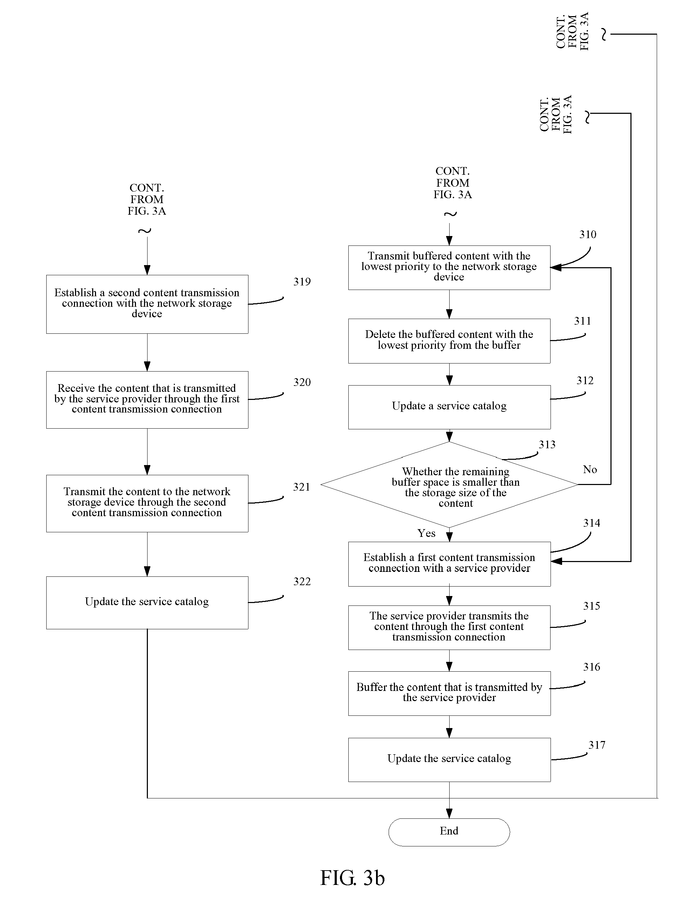

This embodiment provides a method for storing content in a service overlay network. For ease of description, in this embodiment, a structure of a system for transferring content in a service overlay network shown in FIG. 2 is taken as an example for describing in detail the method provided in this embodiment. A content transfer entity is a content transfer device, which is a basis for implementing content transmission between a service requester and a service provider. Its basic function is transmitting content from a content source to a content request end. A transmission path may pass through one or more content transfer entities. A service routing entity, as a key control point of service interaction, provides the routing capability of the interaction messages, participates in almost all service interactions, parses a service request, confirms content that needs to be transmitted in a service session, and sends a content transmission request to the content transfer entity. A service catalog is used to store services and description information of content in a service session, where the description information of content includes but is not limited to location information of the content. A service-layer policy decision entity is a functional entity processing service-layer QoS in the service overlay network. Its functions include monitoring transmission QoS performance of content, establishing a content transmission channel based on the location information of the content and other related information, and the like. A network storage device is a high-speed storage system that is constructed in the service overlay network for duplicating and storing content. With reference to FIG. 2 and referring to FIG. 3, the process of the method provided in this embodiment is specifically as follows:

301: A home content transfer entity of a service provider acquires a QoS performance of content.

Regarding this step, as the service-layer policy decision entity has the function of monitoring transmission QoS performance of content, the home content transfer entity of the service provider may send a request to the service-layer policy decision entity when acquiring the QoS performance of the content. The service-layer policy decision entity may acquire the QoS performance of the content by measuring the content in a previous transfer procedure. The measurement operation may be implemented by the service-layer policy decision entity, and may also be implemented by a separate measurement apparatus which then reports the QoS performance of the content to the service-layer policy decision entity. Other acquisition manners may also be adopted. The manner for the service-layer policy decision entity to acquire a transmission QoS performance of the content in a service session is not limited in this embodiment.

302: The service-layer policy decision entity sends the transmission QoS performance of the content to the home content transfer entity of the service provider. The home content transfer entity of the service provider determines whether the transmission QoS performance meets a QoS requirement of the content. If no, perform step 303, and if yes, the process ends.

In this embodiment, specific content of the QoS performance is not limited, which includes but is not limited to counters such as bandwidth, delay, jitter, and data loss ratio. In this embodiment, a manner for acquiring the QoS requirement is also not limited. For example, the QoS requirement of the content may be carried in the description information of the content. In this situation, the home content transfer entity of the service provider may know the QoS requirement of the content by acquiring the description information of the content. After the QoS performance of the content is acquired, it may be determined whether the QoS performance meets the QoS requirement by comparing the QoS performance with the QoS requirement. For example, the QoS performance of the content acquired by the home content transfer entity of the service provider is a delay being 2 milliseconds whereas the QoS requirement of the content is 1 millisecond. Then, it is determined that the QoS performance does not meet the QoS requirement.

303: The home content transfer entity of the service provider increases the number of requests for the content that does not meet the QoS requirement by 1.

It should be noted that this step and subsequent steps 304 and 305 are all optional. The number of requests for the content that does not meet the QoS requirement is increased to calculate the QoS dissatisfaction of the content, and the QoS dissatisfaction of the content is calculated for being compared with a preset threshold, so that the subsequent process of storing the content on a non-service provider side is performed only after the QoS dissatisfaction of the content reaches the preset threshold. In this way, storage of the content is limited by using a certain condition, thereby improving pertinence of content storage. That is to say, the content is not immediately stored on the non-service provider side once the QoS performance in content transmission does not meet the QoS requirement of the content. The content is stored on the non-service provider side only after the dissatisfaction of the content reaches the preset threshold, thereby saving storage space.

304: The home content transfer entity of the service provider calculates the QoS dissatisfaction of the content.

Calculating the QoS dissatisfaction is calculating the ratio of the number of requests for the content that does not meet the QoS requirement to the total number of requests for the content.

305. The home content transfer entity of the service provider determines whether the QoS dissatisfaction of the content reaches the preset threshold. If yes, perform step 306, and if no, the process ends.

Regarding this step, the preset threshold is not specifically limited in this embodiment. Assuming that the number of requests for the content that does not meet the QoS requirement is 1 and the total number of requests for the content is 4, the ratio of the number of requests for the content that does not meet the QoS requirement to the total number of requests for the content calculated in step 304 should be 0.25. If the preset threshold is 0.2, it is determined that the QoS dissatisfaction of the content reaches the preset threshold, which means that the QoS requirement of content transmission cannot be met if the content is stored only on the current service provider side. Therefore, in this embodiment, the content, whose QoS performance does not meet the QoS requirement, is stored on the non-service provider side. In this way, content transmission meets the QoS requirement without being affected. For the specific process, refer to subsequent steps.

306: The home content transfer entity of the service provider determines whether the remaining buffer space is smaller than the storage size of the content. If the remaining buffer space is not smaller than the storage size of the content, perform step 314, and if the remaining buffer space is smaller than the storage size of the content, perform step 307.

Specifically, in this step, whether the remaining buffer space is smaller than the storage size of the content is determined to determine whether the content, whose QoS performance does not meet the QoS requirement, is able to be buffered. If the remaining buffer space is not smaller than the storage size of the content, it is determined that the content is able to be buffered; if the remaining buffer space is smaller than the storage size of the content, the method further execute whether the remaining buffer space after clearance is smaller than the storage size of the content is further determined. If it is determined that the remaining buffer space after clearance is smaller than the storage size of the content, it is determined that the content is not able to be buffered; if it is determined that the remaining buffer space after clearance is not smaller than the storage size of the content, it is determined that the content is able to be buffered.

The step of further determining whether the remaining buffer space after clearance is smaller than the storage size of the content specifically includes:
determining priorities of buffered content and the content; if the sum of storage sizes of all buffered content whose priorities are lower than the priority of the content is smaller than the storage size of the content, determining that the remaining buffer space after clearance is smaller than the storage size of the content; otherwise, determining that the remaining buffer space after clearance is not smaller than the storage size of the content. For the specific process, refer to subsequent steps.

307: The home content transfer entity of the service provider determines priorities of buffered content and the content, and performs sequencing in ascending order of priority.

In this embodiment, the manner for determining the priorities of buffered content and the content is not specifically limited. Herein, the priority of each piece of content being the ratio of the request rate of the piece of content to the storage size of the piece of content is taken as an example for description. For the request rate of content, the average number of requests for the content in a unit time may apply. For example, in 10 minutes, the total number of requests for content A whose storage size is 0.1 G is 10, and if the unit time is 1 minute, after the request rate of the content A is calculated as 1 count/minute, it can be obtained that the priority of the content A is 10; for content B whose storage size is 0.2 G, the total number of requests for it is 15, it is obtained that the priority of the content B is 7.5 according to the request rate of the content B being 1.5 counts/minute. It can be seen that the priority of the content A is higher than that of the content B.

308: The home content transfer entity of the service provider determines whether the remaining buffer space after clearance is smaller than the storage size of the content. If the remaining buffer space after clearance is smaller than the storage size of the content, perform step 318, and if the remaining buffer space after clearance is not smaller than the storage size of the content, it means that the content is able to be buffered, and perform step 309.

Regarding this step, when whether the remaining buffer space after clearance is smaller than the storage size of the content is determined, if the sum of storage sizes of all buffered content whose priorities are lower than the priority of the content is smaller than the storage size of the content, it is determined that the remaining buffer space after clearance is smaller than the storage size of the content; otherwise, it is determined that the remaining buffer space after clearance is not smaller than the storage size of the content.

For example, the remaining buffer space of the home content transfer entity of the service provider is 0.1 G, the sum of storage sizes of buffered content B and C whose priorities are lower than the priority of the content A is 0.8 G, and the storage size of the content A is 1 G. It can be determined that the remaining buffer space after clearance is smaller than the storage size of the content. That is to say, even if the buffered content B and C are cleared from the buffer of the home content transfer entity of the service provider, the remaining buffer space after clearance of the home content transfer entity of the service provider is only 0.8 + 0.1 = 0.9 G, which is smaller than the storage size 1 G of the content A. Therefore, the content A is still not able to be buffered.

309: The home content transfer entity of the service provider starts buffer clearance and establishes a second content transmission connection with a network storage device.

310: The home content transfer entity of the service provider transmits, through the second content transmission connection, buffered content with the lowest priority to the network storage device for storage.

311: The home content transfer entity of the service provider deletes the buffered content with the lowest priority from the buffer.

312. The home content transfer entity of the service provider updates the location information of the buffered content with the lowest priority in a service catalog, to set the location of the buffered content with the lowest priority to be in the network storage device.

313: The home content transfer entity of the service provider determines whether the current remaining buffer space is smaller than the storage size of the content. If the current remaining buffer space is smaller than the storage size of the content, return to step 310, and if the current remaining buffer space is not smaller than the storage size of the content, perform step 314.

314: The home content transfer entity of the service provider starts content buffering and establishes a first content transmission connection with the service provider.

315: The first content transmission connection is established between the home content transfer entity of the service provider and the service provider. The service provider transmits the content to the home content transfer entity of the service provider through the first content transmission connection.

316: The home content transfer entity of the service provider buffers the content.

317: The home content transfer entity of the service provider updates the location information of the content in the service catalog, that is, sets the location of the content to be in the buffer of the home content transfer entity of the service provider. The process ends.

318: The home content transfer entity of the service provider starts content replication, and establishes a first content transmission connection with the service provider, so that the service provider transmits the content to the home content transfer entity of the service provider through the first content transmission connection.

319: The home content transfer entity of the service provider establishes a second content transmission connection with a network storage device.

320: The service provider transmits the content to the home content transfer entity of the service provider through the first content transmission connection.

321: The home content transfer entity of the service provider transmits, through the second content transmission connection, the content to the network storage device for storage.

322: The home content transfer entity of the service provider updates the location information of the content in the service catalog, that is, sets the location of the content to be in the network storage device. The process ends.

According to step 301 to step 322, a home content transfer entity of a service provider schedules, according to an ascending order of content priority, buffered content with a comparatively low priority to a network storage device for storage to increase the remaining buffer space. Then, content, whose QoS performance does not meet a QoS requirement, is buffered in the buffer of the content transfer entity, or sent to the network storage device for storage when the home content transfer entity of the service provider cannot buffer the content. In addition, the location information of the content is updated in a service catalog, so that the content, whose QoS performance does not meet the QoS requirement, is not only stored on the service provider side. Therefore, when transfer of the content is requested next time, the content can be acquired from a non-service provider, thereby improving QoS performance of content transmission.

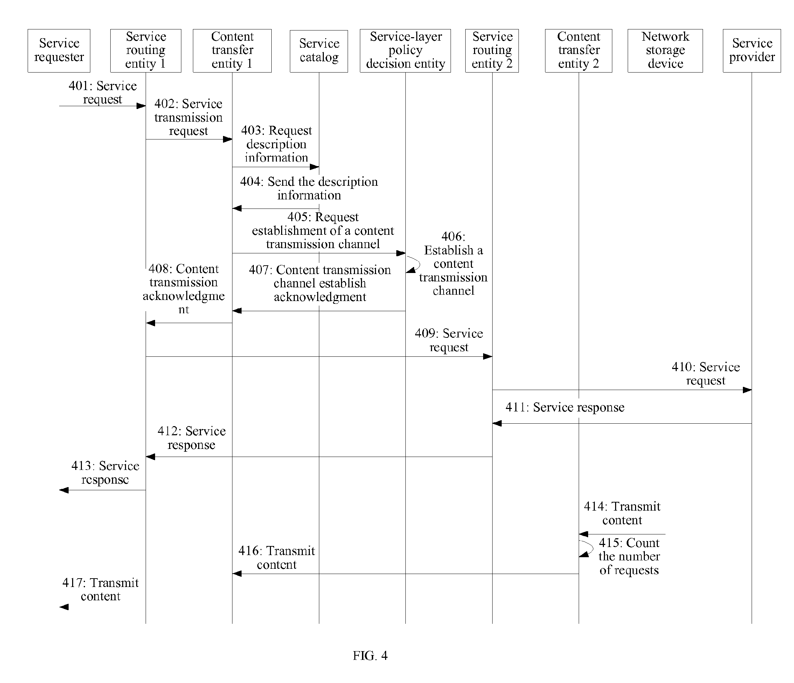

Based on the method for storing content illustrated in FIG. 3 and referring to FIG. 4, the process of an improved method for transferring content in a service overlay network is specifically as follows:

401: A service requester sends a service request to a home service routing entity 1.

402: The service routing entity 1 parses the service request, confirms content that needs to be transmitted in a service session, and sends a content transmission request to a home content transfer entity 1 of the service requester.

403: The content transfer entity 1 requests description information of the content in the service session from a service catalog.

The description information of the content is not specifically limited in this embodiment. The description information includes but is not limited to the location information of the content.

404: The service catalog sends the description information of the content to the content transfer entity 1.

405: The content transfer entity 1 requests a service-layer policy decision entity to establish a content transmission channel, where the request carries the description information of the content.

406: The service-layer policy decision entity establishes a content transmission channel according to the location information of the content and other related information.

Regarding this step, specific content of other related information is not limited in this embodiment. The service-layer policy decision entity is capable of determining, according to the other related information and the location information of the content, entities or devices between which a content transmission channel should be established. For example, if the content is currently stored on a network storage device, in this step, content transmission connections are established between the service requester and the content transfer entity 1, the content transfer entity 1 and a home content transfer entity 2 of a service provider, and the content transfer entity 2 and the network storage device. That is to say, the content transmission channel includes one or more content transmission connections.

407: The service-layer policy decision entity sends a content transmission channel establish acknowledgment to the content transfer entity 1.

408: The content transfer entity 1 sends a content transmission acknowledgment to the service routing entity 1, indicating that content transmission can be performed for the current service session.

409: The service routing entity 1 sends a service request to a home service routing entity 2 of the service provider.

410: The service routing entity 2 sends a service request to the service provider.

411: The service provider sends a service response to the service routing entity 2.

412: The service routing entity 2 forwards the service response to the service routing entity 1.

413: The service routing entity 1 forwards the service response to the service requester.

414: Send, through the content transmission connection between the network storage device and the content transfer entity 2 in the content transmission channel, the content from its location (still taking the network storage device for an example) to the home content transfer entity 2 of the service provider.

415: The content transfer entity 2 increases the total number of requests for the content by 1.

This step is optional. The content transfer entity 2 increases the total number of requests for the content by 1 so that when the content is being stored, the QoS dissatisfaction of the content may be calculated according to the total number of requests for the content, or the priority of the content may be determined according to the total number of requests for the content, for performing buffer clearance. If content storage does not involve the preceding two processes, this step may be skipped. It is not specifically limited in this embodiment.

416: The content transfer entity 2 sends the content to the content transfer entity 1 through the content transmission connection with the content transfer entity 1 in the content transmission channel.

417: The content transfer entity 1 sends the content to the service requester through the content transmission connection with the service requester in the content transmission channel.

According to the method in this embodiment, a home content transfer entity of a service provider buffers content whose QoS performance does not meet a QoS requirement, or a network storage device stores the content. In addition, the location information of the content is updated so that the content can further be stored on a non-service provider side. In this way, when the content needs to be transferred, a content transmission channel can be established according to the location information of the content, and the content can be acquired from the non-service provider, thereby improving QoS performance of content transmission in a service overlay network.

### Embodiment 3

With reference to the description in a second embodiment, in this embodiment, video content needing to be transmitted in a service session for an online video service is taken as an example to describe in further detail a method for storing content in a service overlay network.

The storage size of involved video content A is 0.3 G, the storage size of involved video content B is 0.2 G, the storage size of involved video content C is 0.25 G, the storage size of involved video content D is 0.5 G, and the storage size of involved video content E is 1 G. The buffer space capacity of a home content transfer entity 1 of the online video service is 2 G. At the current time, request rates and corresponding priorities of each piece of video content are listed in Table 1.

**Table 1**

| | Video Content A | Video Content B | Video Content C | Video Content D | Video Content E |
|---|---|---|---|---|---|
| Storage size (G) | 0.3 G | 0.2 G | 0.25 G | 0.5 G | 1G |
| Request rate (counts/second) | 27 | 10 | 18 | 50 | 80 |
| Priority (counts/second*G) | 90 | 50 | 72 | 100 | 80 |

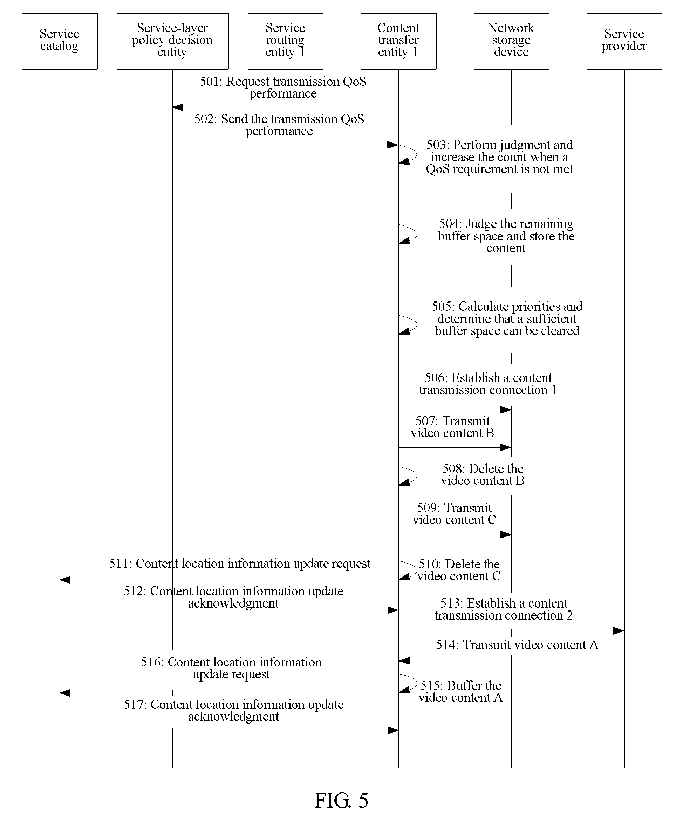

With reference to related information of each piece of content in Table 1 and referring to FIG. 5, the process of the method for storing content in a service overlay network provided in this embodiment is specifically as follows:

501: The home content transfer entity 1 of the online video service VoD (Video on Demand, video on demand) requests a transmission QoS performance of the video content A in the current service session from a service-layer policy decision entity.

502: The service-layer policy decision entity sends the transmission QoS performance of the video content A to the content transfer entity 1, where the QoS performance specifies that a data loss ratio is 20%.

503: A QoS requirement of the video content A is that the data loss ratio does not exceed 12%. In this case, the content transfer entity 1 determines that the transmission QoS performance of the video content A in the current service session does not meet the QoS requirement. At present, the number of requests for the video content A that does not meet the QoS requirement is 199. Then, after the count is increased by 1, the number of requests for the video content A that does not meet the QoS requirement is increased to 200.

504: The total number of requests for the video content A is 2000. Then, calculate the QoS dissatisfaction of the content as 200/2000 = 0.1, that is, 10%, which reaches a preset threshold. The buffer space capacity of the content transfer entity 1 is 2 G. When the video content B, the video content C, the video content D, and the video content E are buffered currently, the current remaining buffer space is 0.05 G. Then, the content transfer entity 1 determines that the remaining buffer space of the buffer of the content transfer entity 1 is smaller than the storage size 0.3 G of the video content A.

505: Calculate priorities of video content. The video content in ascending order of priority is as follows: the video content B, the video content C, the video content E, the video content A, and the video content D. The priorities of the video content B, the video content C, and the video content E are lower than the priority of the video content A, and the sum of the storage sizes of the three pieces of video content is 1.45 G, which is larger than the storage size 0.3 G of the video content A. Then, it is determined that a sufficient buffer space can be cleared to buffer the video content A.

506. Start buffer clearance. The content transfer entity 1 establishes a content transmission connection 1 with a network storage device.

507: The content transfer entity 1 transmits the video content B with the lowest priority 50 (counts/second*G) in the buffer to the network storage device through the content transmission connection 1.

508: The content transfer entity 1 deletes the video content B from the buffer. Then, the current remaining buffer space is 0.25 G, which is smaller than the storage size 0.3 G of the video content A.

509: The content transfer entity 1 continues to transmit the video content C with the lowest priority 72 (counts/second*G) in the buffer to the network storage device through the content transmission connection 1.

510: The content transfer entity 1 deletes the video content C from the buffer. Then, the current remaining buffer space is 0.5 G, which is larger than the storage size 0.3 G of the video content A.

511: The content transfer entity 1 sends a content location information update request to a service catalog to set locations of the video content B and the video content C to be in the network storage device.

512: The service catalog sends a content location information update acknowledgment response to the content transfer entity 1.

513: The content transfer entity 1 starts content buffering, and establishes a content transmission connection 2 with a service provider.

514: The service provider transmits the video content A to the content transfer entity 1 through the content transmission connection 2.

515 : The content transfer entity 1 buffers the video content A.

516: The content transfer entity 1 sends a content location information update request to the service catalog to set the location of the video content A to be in the buffer.

517: The service catalog sends a content location information update acknowledgment response to the content transfer entity 1.

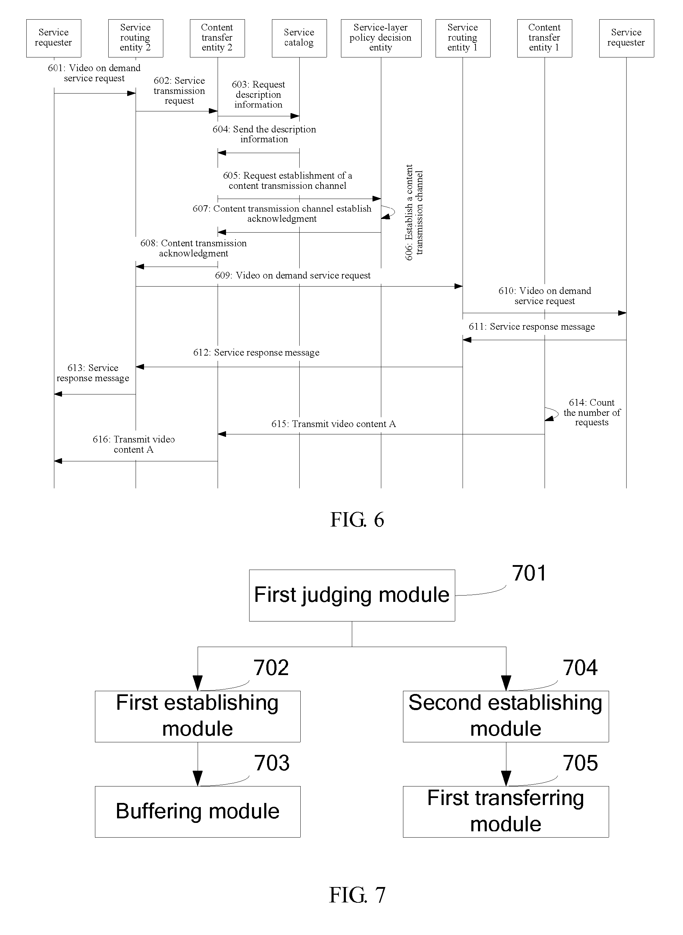

Till now, according to step 501 to step 517, as a non-service provider, the content transfer entity 1 schedules, according to an ascending order of content priority, buffered content with a comparatively low priority to the network storage device to increase the remaining buffer space, and successfully buffers the video content A. On this basis, when transfer of the video content A is requested, as a home content transfer entity of a service provider, the content transfer entity 1 does not need to acquire the video content A from the service provider, and may acquire the video content A from the buffer of the content transfer entity 1. This not only improves efficiency of content transfer, but also improves QoS performance of content transmission. Based on the process of storing content illustrated in FIG. 5, the process of an improved method for transferring content, as shown in FIG. 6, is specifically as follows:

601: A service requester sends a video on demand service request to a home service routing entity 2.

602: The service routing entity 2 parses the video on demand service request, confirms that video content A needs to be transmitted is a service session, and sends a content transmission request of the video content A to a home content transfer entity 2 of the service requester.

603: The content transfer entity 2 requests description information of the video content A in the service session from a service catalog.

604: The service catalog sends the description information of the video content A to the content transfer entity 2.

Specific description information is not limited in this embodiment, and may further include other description information in addition to the location information of the content. For example, a service provider of the video content A is described as an online video service VoD. In this step, in the description information of the video content A sent by the service catalog to the content transfer entity 2, the location information of the video content A is described as being in a buffer.

605: The content transfer entity 2 requests a service-layer policy decision entity to establish a content transmission channel, where the request carries the description information of the video content A.

606: The service-layer policy decision entity establishes a content transmission channel according to the location information of the video content A and other description information, that is, establishes content transmission connections between the service requester and the content transfer entity 2, and the content transfer entity 2 and a home content transfer entity 1 of the VoD.

607: The service-layer policy decision entity sends a content transmission channel establish acknowledgment to the content transfer entity 2.

608: The content transfer entity 2 sends a content transmission acknowledgment to the service routing entity 2, indicating that video content transmission can be performed for the current service session.

609: The service routing entity 2 sends a video on demand service request to a service routing entity 1 of the service provider.

610: The service routing entity 1 sends a video on demand service request to the service provider.

611: The service provider sends a service response message to the service routing entity 1.

612: The service routing entity 1 forwards the service response message to the service routing entity 2.

613: The service routing entity 2 forwards the service response message to the service requester.

614: The content transfer entity 1 acquires the video content A from the buffer, and increases the total number of requests for the video content A by 1. Then, the total number of requests for the video content A becomes 2001.

615: The content transfer entity 1 sends the video content A to the content transfer entity 2 through the content transmission connection between the content transfer entity 1 and the content transfer entity 2.

616: The content transfer entity 2 sends the video content A to the service requester through the content transmission connection between the service requester and the content transfer entity 2.

According the method provided in this embodiment, the content transfer entity 1 buffers the video content A whose QoS performance does not meet a QoS requirement, and updates the location information of the video content A in the service catalog, so that when the video content A needs to be transferred, the content transfer entity 1 directly acquires the video content A from the buffer, and does not need to acquire it from the service provider. This not only improves efficiency of content transfer, but also improves QoS performance of content transmission in a service overlay network.

### Embodiment 4

Referring to FIG. 7, this embodiment provides a content transfer device, where the device includes:
a first determining module 701, configured to determine whether content, whose Quality of Service QoS performance does not meet a QoS requirement, is able to be buffered;
a first establishing module 702, configured to: when the first determining module 701 determines that the content, whose QoS performance does not meet the QoS requirement, is able to be buffered, establish a first content transmission connection with a service provider corresponding to the content;
a buffering module 703, configured to buffer the content that is transmitted by the service provider through the first content transmission connection established by the first establishing module 702;
a second establishing module 704, configured to: when the first determining module 701 determines that the content, whose QoS performance does not meet the QoS requirement, is not able to be buffered, establish a first content transmission connection with a service provider corresponding to the content, and establish a second content transmission connection with a network storage device; and
a first transferring module 705, configured to transfer, through the second transmission connection established by the second establishing module 704, the content that is transmitted by the service provider through the first content transmission connection established by the second establishing module 704, to the network storage device for storage.

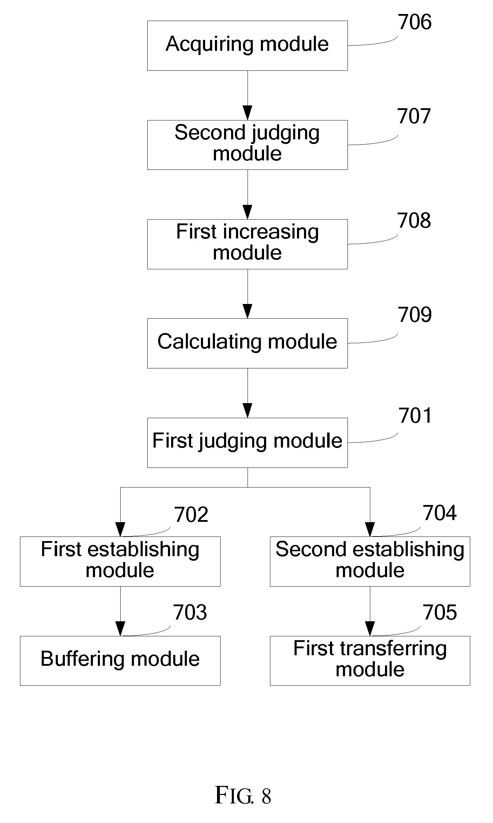

Referring to FIG. 8, the device further includes:
an acquiring module 706, configured to acquire a QoS performance of content before the first determining module 701 determines whether a content, whose QoS performance does not meet a QoS requirement, is able to be buffered;
a second determining module 707, configured to determine whether the QoS performance acquired by the acquiring module 706 meets the QoS requirement of the content;
a first increasing module 708, configured to: when the second determining module 707 determines that the QoS performance does not meet the QoS requirement of the content, increase the number of requests for the content that does not meet the QoS requirement; and
a calculating module 709, configured to: when the first increasing module 708 increases the number of requests for the content that does not meet the QoS requirement, calculate the ratio of the number of requests for the content that does not meet the QoS requirement to the total number of requests for the content.

The first determining module 701 is configured to: when the ratio calculated by the calculating module 709 reaches a preset threshold, perform the step of determining whether the content, whose QoS performance does not meet the QoS requirement, is able to be buffered.

The first determining module 701 is specifically configured to determine whether the remaining buffer space is smaller than the storage size of the content. If the remaining buffer space is not smaller than the storage size of the content, it is determined that the content is able to be buffered, and if the remaining buffer space is smaller than the storage size of the content, whether the remaining buffer space after clearance is smaller than the storage size of the content is determined. If the remaining buffer space after clearance is smaller than the storage size of the content, it is determined that the content is not able to be buffered; if the remaining buffer space after clearance is not smaller than the storage size of the content, it is determined that the content is able to be buffered.

Further, when determining whether the remaining buffer space after clearance is smaller than the storage size of the content, the first determining module 701 is specifically configured to determine priorities of buffered content and the content. If the sum of storage sizes of all buffered content whose priorities is lower than the priority of the content is smaller than the storage size of the content, it is determined that the remaining buffer space after clearance is smaller than the storage size of the content; otherwise, it is determined that the remaining buffer space after clearance is not smaller than the storage size of the content.

Specifically, when determining the priorities of the buffered content, the first determining module 701 is specifically configured to calculate the ratio of the request rate of a piece of content to the storage size of the piece of content, where the ratio of the request rate of a piece of content to the storage size of the piece of content is used as the priority of the piece of content.

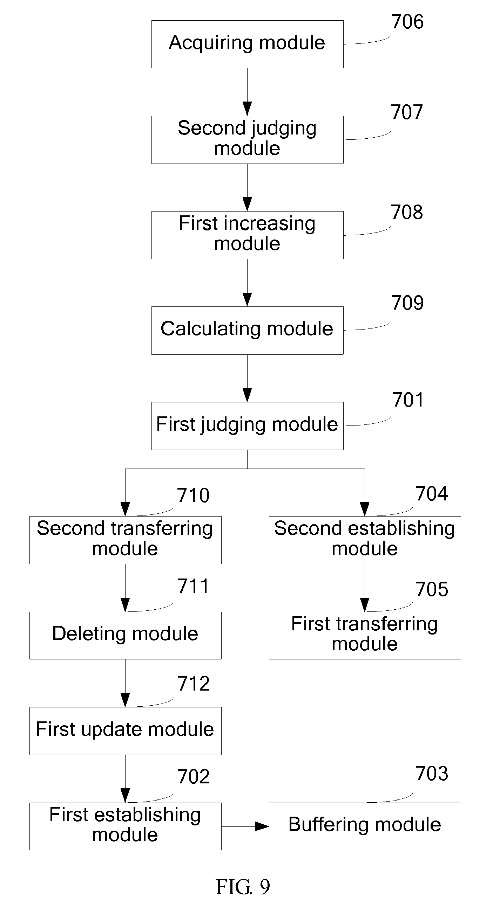

Referring to FIG. 9, the device further includes:
a second transferring module 710, configured to: after the first determining module 701 determines that the remaining buffer space after clearance is not smaller than the storage size of the content, transfer, according to an ascending order of priority through the first transmission connection, buffered content whose priorities are smaller than the priority of the content to the network storage device for storage;
a deleting module 711, configured to: after the second transferring module 710 transfers, through the first transmission connection, the buffered content whose priorities are smaller than the priority of the content to the network storage device for storage, delete the buffered content until the remaining buffer space after clearance is not smaller than the storage size of the content; and
a first update module 712, configured to update the location information of the buffered content deleted by the deleting module 711 in a service catalog to be in the network storage device.

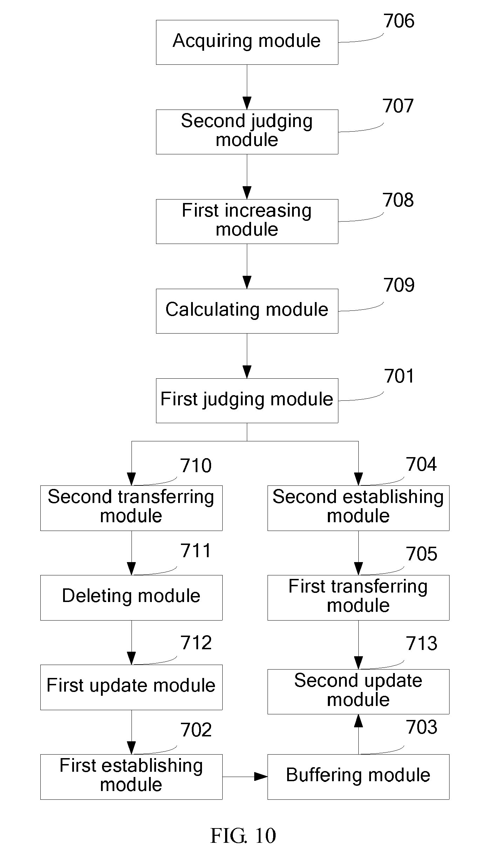

Referring to FIG. 10, the device further includes:
a second update module 713, configured to update the location information of the content in the service catalog to be in the buffer or the network storage device after the buffering module 703 buffers the content that is transmitted by the service provider through the first content transmission connection established by the first establishing module 702, or the first transferring module 705 transfers, through the second content transmission connection established by the second establishing module 704, the content that is transmitted by the service provider through the first content transmission connection established by the second establishing module 704, to the network storage device for storage.

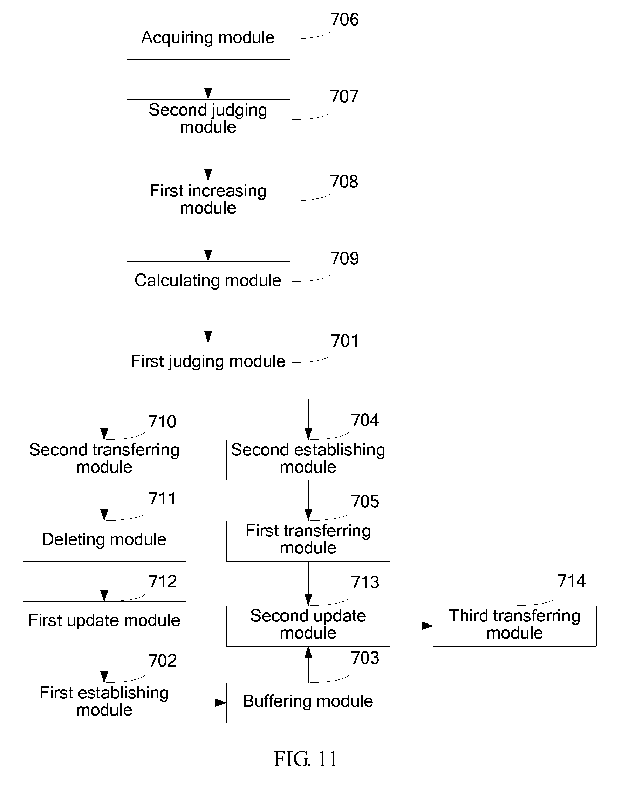

Referring to FIG. 11, the device further includes:
a third transferring module 714, configured to: after it is confirmed that the content needs to be transferred, and a content transmission channel has been established according to the location information of the content updated by the second update module 713, transfer the content to a service requester through the content transmission channel.

The content transmission channel is established among the service requester, the content transfer device, and the location of the content, and includes one or more content transmission connections.

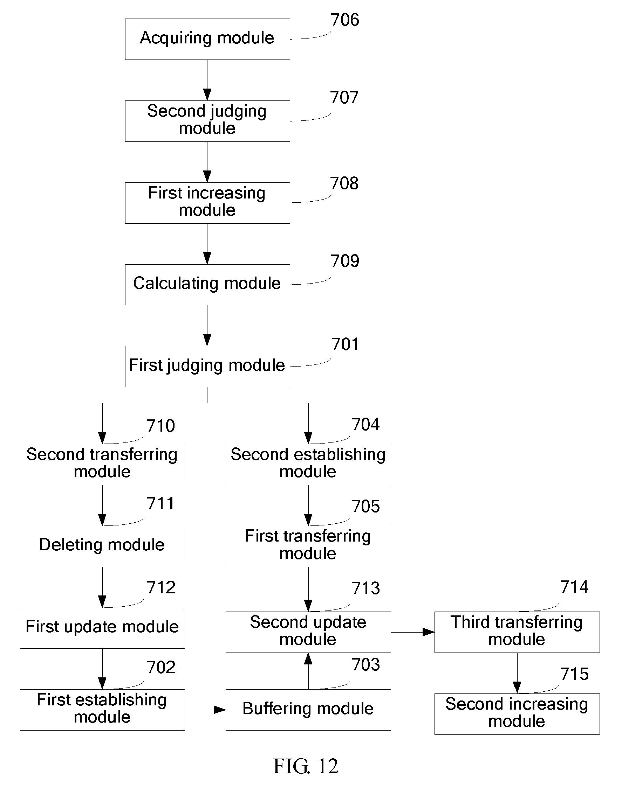

Referring to FIG. 12, the device further includes:
a second increasing module 715, configured to increase the total number of requests for the content after the third transferring module 714 transfers the content to the service requester through the content transmission channel.

The device provided in this embodiment schedules, according to an ascending order of content priority, buffered content with a comparatively low priority in the buffer to a network storage device to increase the remaining buffer space. Then, content with a comparatively higher priority is buffered in the buffer or transferred to the network storage device for storage. In addition, the location information of the content is updated in a service catalog, so that a content transmission channel can be established according to the location information of the content during content transfer, and the content can be acquired from a non-service provider, thereby improving QoS performance of content transmission in a service overlay network.

### Embodiment 5

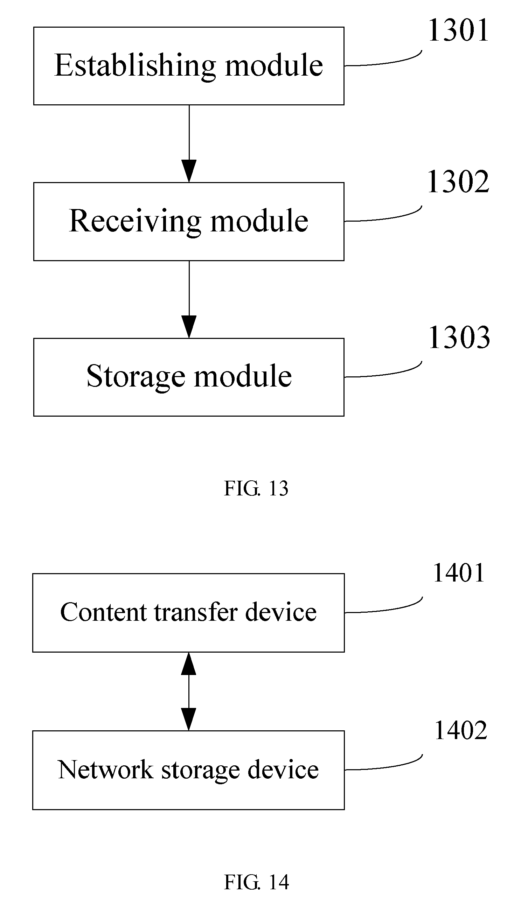

Referring to FIG. 13, this embodiment provides a network storage device, where the device includes:
an establishing module 1301, configured to: when a home content transfer device of a service provider cannot buffer content whose QoS performance does not meet a QoS requirement, establish a content transmission connection with the home content transfer device of the service provider;
a receiving module 1302, configured to receive content that is transmitted by the service provider to the content transfer device and then transferred by the content transfer device through the content transmission connection established by the establishing module 1301, where the content is the content whose QoS performance does not meet the QoS requirement; and
a storage module 1303, configured to store the content that is transmitted by the service provider to the content transfer device and received by the receiving module 1302; where
the establishing module 1301 is further configured to: when a home content transfer device of a service provider clears buffer space for buffering content whose QoS performance does not meet a QoS requirement, establish a content transmission connection with the home content transfer device of the service provider;
the receiving module 1302 is further configured to receive content that has been buffered on the content transfer device and is transferred through the content transmission connection by the content transfer device, where the priority of the buffered content is lower than the priority of the content to be buffered by the content transfer device; and
the storage device 1202 is further configured to store the content that has been buffered by the content transfer device and is received by the receiving module 1201.

The device provided in this embodiment establishes a content transmission connection with a home content transfer device of a service provider when the home content transfer device of the service provider clears buffer space for buffering content whose QoS performance does not meet a QoS requirement, and stores content that has been buffered by the content transfer device, so that the content transfer device is capable of buffering the content whose QoS performance does not meet the QoS requirement; or establishes a content transmission connection with a home content transfer device of a service provider when the home content transfer device of the service provider cannot buffer content whose QoS performance does not meet a QoS requirement, so as to store the content whose QoS performance does not meet the QoS requirement and is transferred by the content transfer device. In this way, the content, whose QoS performance does not meet the QoS requirement, can be acquired from a non-service provider during transfer, thereby improving QoS performance of content transmission in a service overlay network.

### Embodiment 6

Referring to FIG. 14, this embodiment provides a system for storing content in a service overlay network, where the system includes: a content transfer device 1401 and a network storage device 1402.

The content transfer device 1401 is the content transfer device provided in Embodiment 4, and the network storage device 1402 is the network storage device provided in Embodiment 5.

According to the system provided in this embodiment, a content transfer device schedules, according to an ascending order of content priority, buffered content with a comparatively low priority in a buffer to a network storage device for storage to increase the remaining buffer space, and then buffers content whose QoS performance does not meet a QoS requirement in the buffer of the content transfer device or sends the content to the network storage device for storage when the content transfer device cannot buffer the content. In addition, the location information of the content is updated in a service catalog. In this way, when the content, whose QoS performance does not meet the QoS requirement, needs to be transferred, a content transmission channel is established according to the location information of the content, and the content is acquired from a non-service provider, thereby improving QoS performance of content transmission in a service overlay network.

It should be noted that when the content transfer device and the network storage device provided in the preceding embodiments store content, division of the preceding functional modules is merely taken as an example for description. In a practical application, the preceding functions may be allocated to and completed by different functional modules as required. That is, a device is divided into different functional modules for completing all or part of the functions described above. In addition, conceptions of the content transfer device, the network storage device, and the system for storing content in a service overlay network provided in the preceding embodiments are the same as the conception of the method for storing content in a service overlay network. For their specific implementation processes, refer to the method embodiments. Details are not provided herein.

The sequence numbers of the above embodiments are merely for the convenience of description, and do not imply the preference among the embodiments.

All or part of the steps according to the embodiments of the present invention may be implemented by using software, and the corresponding software programs may be stored in a readable storage medium, such as an optical disk or a hard disk.

The above descriptions are merely exemplary embodiments of the present invention, but are not intended to limit the present invention. Any modification, equivalent replacement, or improvement made without departing from the spirit and principle of the present invention shall fall within the protection scope of the present invention.

## Claims

1. A method for storing content in a service overlay network, comprising:
determining, by a content transfer device, whether a content whose Quality of Service, QoS, performance does not meet a QoS requirement is able to be buffered;
if the content is able to buffered, establishing, by the content transfer device, a first content transmission connection with a service provider corresponding to the content, and buffering the content that is transmitted by the service provider through the first content transmission connection; and
if the content is not able to be buffered, establishing, by the content transfer device, a first content transmission connection with a service provider corresponding to the content, establishing a second content transmission connection with a network storage device, and transferring, through the second content transmission connection, the content that is transmitted by the service provider through the first content transmission connection, to the network storage device for storage.

2. The method according to claim 1, wherein before the determining, by a content transfer device, whether the content, whose Quality of Service, QoS, performance does not meet the QoS requirement is able to be buffered, the method further comprises:
acquiring the QoS performance of the content, after it is determined that the QoS performance of the content does not meet the QoS requirement of the content, increasing a number of requests for the content that does not meet the QoS requirement, and calculating the ratio of the number of requests for the content that does not meet the QoS requirement to the total number of requests for the content; and
if the ratio reaches a preset threshold, performing the step of determining whether the content whose QoS performance does not meet a QoS requirement is able to be buffered.

3. The method according to claim 1, wherein the determining whether the content whose QoS performance does not meet a QoS requirement is able to be buffered, specifically comprises:
determining whether the remaining buffer space is smaller than a storage size of the content;
if the remaining buffer space is not smaller than the storage size of the content, determining that the content is able to be buffered; and
if the remaining buffer space is smaller than the storage size of the content, further determining whether a remaining buffer space after clearance is smaller than the storage size of the content, if it is determined that the remaining buffer space after clearance is smaller than the storage size of the content, determining that the content is not able to be buffered; if it is determined that the remaining buffer space after clearance is not smaller than the storage size of the content, determining that the content is able to be buffered.

4. The method according to claim 3, wherein the determining whether the remaining buffer space after clearance is smaller than the storage size of the content specifically comprises:
determining priorities of buffered content and the content; if a sum of storage sizes of all buffered content whose priorities are lower than the priority of the content is smaller than the storage size of the content, determining that the remaining buffer space after clearance is smaller than the storage size of the content; if the sum of storage sizes of all buffered content whose priorities are lower than the priority of the content is not smaller than the storage size of the content, determining that the remaining buffer space after clearance is not smaller than the storage size of the content.

5. The method according to claim 4, wherein the determining priorities of buffered content and the content specifically comprises:
calculating the ratio of the request rate of a piece of content to the storage size of the piece of content, and using the ratio of the request rate of a piece of content to the storage size of the piece of content as the priority of each piece of content.

6. The method according to claim 4, wherein after determining that the remaining buffer space after clearance is not smaller than the storage size of the content, the method further comprises:
according to an ascending order of priority, transferring the buffer content whose priorities are smaller than the priority of the content to the network storage device for storage, and deleting the buffered content until the remaining buffer space after clearance is not smaller than the storage size of the content.

7. The method according to claim 1, wherein after the buffering the content that is transmitted by the service provider through the first content transmission connection, or the transferring, through the second content transmission connection, the content that is transmitted by the service provider through the first content transmission connection, to the network storage device for storage, the method further comprises:
updating the location information of the content in a service catalog to be in a buffer or the network storage device.

8. The method according to claim 7, wherein after the updating the location information of the content in a service catalog to be in a buffer or the network storage device, the method further comprises:
after it is confirmed that the content needs to be transferred and a content transmission channel has been established according to the updated location information of the content, transferring the content to a service requester through the content transmission channel.

9. A content transfer device, comprising:
a first determining module, configured to determine whether a content whose Quality of Service, QoS, performance does not meet a QoS requirement is able to is able to be buffered;
a first establishing module, configured to: when the first determining module determines that the content whose QoS performance does not meet the QoS requirement is able to be buffered, establish a first content transmission connection with a service provider corresponding to the content;
a buffering module, configured to buffer the content that is transmitted by the service provider through the first content transmission connection established by the first establishing module;
a second establishing module, configured to: when the first determining module determines that the content whose QoS performance does not meet the QoS requirement is not able to be buffered, establish a first content transmission connection with a service provider corresponding to the content, and establish a second content transmission connection with a network storage device; and
a first transferring module, configured to transfer, through the second transmission connection established by the second establishing module, the content that is transmitted by the service provider through the first content transmission connection established by the second establishing module, to the network storage device for storage.

10. The device according to claim 9, further comprising:
an acquiring module, configured to acquire a QoS performance of content before the first determining module determines whether the content whose QoS performance does not meet a QoS requirement is able to be buffered;
a second determining module, configured to determine whether the QoS performance acquired by the acquiring module meets the QoS requirement of the content;
a first increasing module, configured to: when the second determining module determines that the QoS performance does not meet the QoS requirement of the content, increase the number of requests for the content that does not meet the QoS requirement;
a calculating module, configured to: when the first increasing module increases the number of requests for the content that does not meet the QoS requirement, calculate the ratio of the number of requests for the content that does not meet the QoS requirement to the total number of requests for the content; and
wherein the first determining module, configured to: when the ratio calculated by the calculating module reaches a preset threshold, perform the step of determining whether the content whose QoS performance does not meet the QoS requirement, is able to be buffered.

11. The device according to claim 9, wherein the first determining module is specifically configured to determine whether the remaining buffer space is smaller than the storage size of the content, if the remaining buffer space is not smaller than the storage size of the content, determine that the content is able to be buffered, and if the remaining buffer space is smaller than the storage size of the content, further determine whether the remaining buffer space after clearance is smaller than the storage size of the content; if it is determined that the remaining buffer space after clearance is smaller than the storage size of the content, determine that the content is not able to be buffered; if it is determined that the remaining buffer space after clearance is not smaller than the storage size of the content, determine that the content is able to be buffered.

12. The device according to claim 11, wherein when determining whether the remaining buffer space after clearance is smaller than the storage size of the content, the first determining module is specifically configured to determine priorities of buffered content and the content, if the sum of storage sizes of all buffered content whose priorities is lower than the priority of the content is smaller than the storage size of the content, determine that the remaining buffer space after clearance is smaller than the storage size of the content; if the sum of storage sizes of all buffered content whose priorities is lower than the priority of the content is not smaller than the storage size of the content, determine that the remaining buffer space after clearance is not smaller than the storage size of the content.
